# EUROPÄISCHE PATENTSCHRIFT

(11) **EP 2 771 747 B1**
(45) Veröffentlichungstag und Bekanntmachung des Hinweises auf die Patenterteilung: **07.06.2023**
(21) Anmeldenummer: 12743702.8
(22) Anmeldetag: 20.07.2012
(51) Int. Cl.: G05B 19/042, G06F 16/955

(54) **VERFAHREN ZUM EINLESEN EINES ZWEIDIMENSIONALEN MUSTERCODES UND ZUR DARSTELLUNG UND VERWENDUNG VON DATEN, EIN MOBILES GERÄT ZUM DURCHFÜHREN DES VERFAHRENS UND EIN VERFAHREN ZUM ERSTELLEN EINES ZWEIDIMENSIONALEN MUSTERCODES**
METHOD FOR READING IN A TWO-DIMENSIONAL PATTERN CODE AND FOR PRESENTING AND USING DATA, A MOBILE DEVICE FOR CARRYING OUT THE METHOD, AND A METHOD FOR CREATING A TWO-DIMENSIONAL PATTERN CODE
PROCÉDÉ DE LECTURE D'UN CODE DE MODÈLE BIDIMENSIONNEL ET DE REPRÉSENTATION ET UTILISATION DE DONNÉES, APPAREIL PORTATIF POUR RÉALISER LE PROCÉDÉ ET PROCÉDÉ DE RÉALISATION D'UN CODE DE MODÈLE BIDIMENSIONNEL

(30) Priorität: 28.10.2011 DE 102011085439
(43) Veröffentlichungstag der Anmeldung: 03.09.2014
(60) Teilanmeldung: 14194923.0
(73) Patentinhaber: Krones AG, 93073 Neutraubling (DE)
(72) Erfinder: PRONOLD, Timo, 93059 Regensburg (DE)
(74) Vertreter: Grünecker Patent- und Rechtsanwälte PartG mbB
(86) Internationale Anmeldenummer: PCT/EP2012/064317
(87) Internationale Veröffentlichungsnummer: WO 2013/060492

(56) Entgegenhaltungen:
- EP-A1- 1 469 363
- EP-A1- 2 275 986
- DE-A1-102006 000 012
- JP-A- 2006 151 266
- US-A1- 2005 107 908

## Beschreibung

Die Erfindung betrifft ein Verfahren zum Einlesen eines zweidimensionalen Mustercodes einer Komponente in einer Anlage mit verschiedenen Komponenten mittels einer Aufnahmevorrichtung eines mobilen Geräts und zur Darstellung und Verwendung von Daten mittels einer Ausgabevorrichtung des mobilen Geräts.

Moderne Abfüllanlagen erstrecken sich oftmals über weite Strecken, wobei es entlang der Anlage viele Stellen gibt, an denen Komponenten der Anlage bedient, diagnostiziert oder parametrisiert werden müssen. Im Allgemeinen gibt es meist nur eine feste Stelle für ein Bediengerät (iPanel), von dem aus die Anlage gesteuert wird. Um flexibel arbeiten zu können, d.h. um an den einzelnen Stellen der Anlage, an denen bedient, diagnostiziert oder parametrisiert werden muss, entsprechende Prozesse durchführen zu können, ist der Einsatz eines mobilen Bedien- und Informationsgeräts anzustreben, wodurch die Durchführung der Prozesse an den jeweiligen Stellen entlang der Abfüllanlage möglich ist.

Ein Problem bei mobilen Geräten ist aber oft die begrenzte Informationsmenge, die dargestellt und verarbeitet werden kann, die beispielsweise durch die Displaygröße, die Größe des Speichers und die Prozessorgeschwindigkeit limitiert ist. Die vorliegende Erfindung sieht daher die Verwendung von zweidimensionalen Mustercodes vor, wie beispielsweise von zweidimensionalen Strichcodes, die auch als QR-Codes^{®} bezeichnet werden.

Ein QR-Code^{®} kann alle Datentypen handhaben, wie beispielsweise numerische und alphabetische Zeichen, Symbole, Binärzeichen und Kontrollcodes. Der QR-Code^{®} besteht aus einer quadratischen Matrix aus schwarzen und weißen Punkten, welche die codierten Daten binär darstellen. Eine spezielle Markierung in drei der vier Ecken des Quadrats gibt die Orientierung vor, wobei der QR-Code^{®} aber in jeder Orientierung ausgelesen werden kann. Die Daten im QR-Code^{®} sind durch einen Fehler korrigierenden Code geschützt, wodurch der Verlust von bis zu 30% von Codewörtern toleriert wird, so dass eine Decodierung des QR-Codes^{®} trotzdem möglich ist.

DE 20 2010 016 090 U1 offenbart eine Wegweisertafel, die mit einem integrierten QR-Code^{®} ausgestattet ist, so dass mittels des QR-Codes^{®} weitere aktuelle Informationen zur Verfügung gestellt werden können, da durch den QR-Code^{®} beispielsweise mittels eines Foto-Handys eine Web-Serververbindung hergestellt werden kann. Die aktuellen Informationen können dynamisch für eine jeweilige Personengruppe und Fahrzeugart zusammen oder getrennt dargestellt werden.

DE 101 25 336 A1 offenbart eine individuelle Einspritzvorrichtung, die ein Muster zum Identifizieren umfasst, das auch nach dem Zusammenbau eines Verbrennungsmotors, der diese Einspritzvorrichtung umfasst, einfach zu lesen ist. Beispielsweise kann das Muster als QR-Code^{®} ausgebildet sein, der an jeder Einspritzvorrichtung zum Aufnehmen von Charakteristiken der Einspritzvorrichtung angebracht ist und außerhalb vom Verbrennungsmotor gelesen werden kann, auch nachdem der Zusammenbau des Verbrennungsmotors beendet ist. Von dem Muster ausgelesene Daten werden zu einer elektronischen Regeleinheit übermittelt und Kraftstoffeinspritzcharakteristiken können auf der Grundlage der Charakteristiken der individuellen Einspritzvorrichtung eingestellt werden.

DE 10 2009 031 865 A1 offenbart, dass QR-Codes^{®} mittels einer Kamera eines Mobilfunkendgeräts gelesen und zugehörige Informationen auf einem Ausgabemittel des Mobilfunkendgeräts dargestellt werden können. Um individualisierte Informationen für einen Kunden zur Verfügung zu stellen, können dem Anbieter einer Webseite kunden-individuelle Informationen in der Form von Profildaten zur Verfügung gestellt werden. Die bei der Anwahl der Webseite vom Mobilfunkendgerät übertragenen Identifikationsdaten können genutzt werden, um die diesen Identifikationsdaten zugeordneten Profildaten abzurufen.

JP 2000085786 A offenbart einen Mehrwegbehälter, an den eine Schutzhülle mit einer Erkennungsmarke angebracht werden kann. Ein QR-Code^{®} der Erkennungsmarke kann direkt gelesen werden, da er in einer Öffnung der Schutzhülle angeordnet ist. Der QR-Code^{®} kann beispielsweise Informationen über den Bestimmungsort und den Inhalt des Mehrwegbehälters enthalten.

JP 2002087533 A offenbart einen Datenträger mit einem beschreibbaren Bereich, wobei Aufzeichnungs- und Löschvorgänge möglich sind und wobei eine optisch erkennbare Information erstellt wird. Daten betreffend den Versand von Produkten können in einem QR-Code^{®} angegeben sein, der an einem Transportbehälter angebracht wird.

US 2005/0107908 A1 offenbart, dass zur Identifizierung eines NC-Maschinenwerkzeugs an diesem ein Bezeichnungsschild mit einem zweidimensionalen Code angeordnet werden kann.

DE 10 2006 000 012 A1 offenbart ein Kraftstoffeinspritzsteuersystem, das einen Korrekturwert eines Soll-Kraftstoffdrucks innerhalb einer gemeinsamen Kraftstoffleitung basierend auf dem Maximalwert der Einspritzrate und einen Korrekturwert der Befehlszeit basierend auf der Abweichung berechnet. Die Korrekturwerte werden in einem QR-Code^{®} des Kraftstoffeinspritzventils gespeichert und können bei Bedarf ausgelesen werden.

EP 1 469 363 A1 offenbart ein Verfahren und eine Vorrichtung zur Anzeige von ein Anlagenteil einer Industrieanlage betreffenden Informationen auf einem mobilen Display. Jeder Anlagenteil weist einen Sender auf, der ein das Anlagenteil spezifizierendes Signal aussendet. Das Signal wird von einem Empfänger des mobilen Anzeigegeräts empfangen und an eine zentrale Auswertestation weitergeleitet. Diese stellt dem Analgenteil zugehörige Information zur Verfügung und überträgt diese an das Anzeigegerät.

Die vorliegende Erfindung ermöglicht einem Nutzer beispielsweise mit seinem mobilen Gerät zu einer erforderlichen Stelle in der Anlage zu gehen und einen an einem Antriebsmotor vorhandenen zweidimensionalen Mustercode mittels einer Kamera des mobilen Geräts einzulesen. Die übermittelten Daten über den betreffenden Antriebsmotor können das mobile Gerät veranlassen, dem Nutzer die zugehörigen Daten des Antriebsmotors wie beispielsweise Parameter oder Fehlermeldungen anzuzeigen.

Der vorliegenden Erfindung liegt somit die Aufgabe zugrunde, ein Verfahren zur Verfügung zu stellen, womit eine dezentrale Steuerung einer Anlage ermöglicht wird.

Die Aufgabe wird gelöst durch das Verfahren nach Anspruch 1. Bevorzugte Ausführungsformen sind in den abhängigen Ansprüchen dargelegt.

Ein erfindungsgemäßes Verfahren zum Einlesen eines zweidimensionalen Mustercodes einer Komponente in einer Anlage mit verschiedenen Komponenten mittels einer Aufnahmevorrichtung eines mobilen Geräts und zur Darstellung und Verwendung von Daten, die in dem zweidimensionalen Mustercode enthalten sind, mittels einer Ausgabevorrichtung des mobilen Geräts, umfasst die folgenden Schritte: Einlesen eines zweidimensionalen Mustercodes mittels einer Aufnahmevorrichtung eines mobilen Geräts; Decodieren des zweidimensionalen Mustercodes, um Daten zu erhalten, die durch den zweidimensionale Mustercode gegeben sind und in Bezug zu der Komponente stehen, an der der zweidimensionalen Mustercode angeordnet ist; Anpassen der Daten entsprechend von Nutzerdaten und Darstellen der angepassten Daten mittels einer Ausgabevorrichtung des mobilen Geräts, wobei die angepassten Daten interaktiv sind, so dass einem Nutzer bei Aktivierung der interaktiven Daten weitere Daten und Informationen auf der Ausgabevorrichtung anzeigbar sind; in Antwort auf die Aktivierung von interaktiven angepassten Daten durch den Nutzer, Herstellen einer Verbindung mittels einer Verbindungssoftware zwischen dem mobilen Gerät und einer Internetseite und/oder einem zentralen Bediengerät, wobei das Darstellen der angepassten Daten eine Anzeige von Betriebsparametern, aktuellen Betriebswerten, Fehlermeldungen und/oder einem zeitlichen Betriebsverlauf der Komponente umfasst.

Der zweidimensionale Mustercode ermöglicht einen einfachen Zugriff auf in ihm enthaltene Daten, die eine Komponente der Anlage betreffen, an der der Code vorzugsweise angebracht ist, so dass für einen Nutzer, der den Code mittels eines mobilen Geräts ausliest, schon vor der Decodierung der Daten erkennbar ist, dass er beispielsweise Daten erhalten wird, die einen Bezug zu der Komponente, beispielsweise einem Antriebsmotor, der Anlage haben. Nach der Decodierung werden dem Nutzer hierbei direkt Daten auf der Ausgabevorrichtung des mobilen Geräts angezeigt Die Daten sind interaktiv ausgeführt, so dass dem Nutzer bei Aktivierung der angepassten Daten weitere Daten und Informationen auf der Ausgabevorrichtung anzeigbar sind.

Durch das Bereitstellen von interaktiven Daten hat ein Nutzer die Möglichkeit auf weitere Daten und/oder Informationen zuzugreifen. Die Daten und/oder Informationen werden auf einer Internetseite und/oder von einem zentralen Bediengerät zur Verfügung gestellt. Um darauf zugreifen zu können, wird zuvor eine Verbindung mittels einer Verbindungssoftware zwischen dem mobilen Gerät und der Internetseite und/oder dem zentralen Bediengerät hergestellt, so dass die Daten und/oder Informationen übermittelt werden können.

Anhand der dargestellten Werte kann der Nutzer einen raschen Überblick darüber erhalten, ob eine Komponente der Anlage erwartungsgemäß arbeitet, ob Fehler aufgetreten sind, die eventuell korrigiert werden müssen und/oder wie die weitere Arbeitsauslastung der Komponente beispielsweise für einen weiteren Produktionsauftrag oder für eine geplante Wartung ist.

Für einen Antriebsmotor der Anlage können die Betriebsparameter beispielsweise die Geschwindigkeit, der zeitliche Beginn und das zeitliche Ende eines Einsatzes des Antriebsmotors umfassen. Die aktuellen Betriebswerte umfassen dann die gegenwärtige Geschwindigkeit des Antriebsmotors und Uhrzeiten für den Beginn und das Ende des Einsatzes.

Eine Fehlermeldung des Antriebsmotors kann umfassen, dass eine Grenztemperatur überschritten wurde, wodurch es zu einer Überlastung und/oder einer Beschädigung des Antriebsmotors kommen kann.

Eine Anlage kann mehr als 50 oder 100 oder 200 zweidimensionale Mustercodes umfassen. Die zweidimensionalen Strichcodes können jeweils an einzelnen Komponenten der Anlage angebracht sein. Auch können sie an Komponenten der Infrastruktur der Anlage, wie beispielsweise Klimaanlagen und/oder Notstromgeneratoren oder dergleichen angebracht sein. Das Verfahren kann weiter den Schritt vom Darstellen einer Position der Komponente innerhalb der Anlage umfassen, wobei vorzugsweise auch eine Position eines zentralen Bediengeräts der Anlage dargestellt wird.

Da sich die modernen Abfüllanlagen über weite Strecken und auch über mehrere Etagen erstrecken können, kann es sinnvoll sein, einem Nutzer die Position einer Komponente anzuzeigen, an der er gerade arbeitet, um beispielsweise die aktuellen Betriebswerte zu überprüfen.

Weiterhin kann das Verfahren in Antwort auf Aktivieren von interaktiven Daten oder von interaktiven angepassten Daten, das Herstellen einer Verbindung mittels einer Verbindungssoftware zwischen dem mobilen Gerät und einer Internetseite und/oder einem zentralen Bediengerät umfassen.

Durch das Bereitstellen von interaktiven Daten hat ein Nutzer die Möglichkeit auf weitere Daten und/oder Informationen zuzugreifen. Vorteilhafterweise werden die Daten und/oder Informationen auf einer Internetseite und/oder von einem zentralen Bediengerät zur Verfügung gestellt. Um darauf zugreifen zu können, wird zuvor eine Verbindung mittels einer Verbindungssoftware zwischen dem mobilen Gerät und der Internetseite und/oder dem zentralen Bediengerät hergestellt, so dass die Daten und/oder Informationen übermittelt werden können.

Weiter kann das Verfahren den Schritt/die Schritte umfassen: in Auftrag geben eines Wartungsauftrags für die Komponente der Anlage; und/oder Bestellen eines Ersatzteils für die Komponente der Anlage.

Um einen störungsfreien Betrieb einer Anlage mit ungeplanten Ausfällen zu gewährleisten und um Sicherheitsauflagen zu erfüllen, ist eine regelmäßige Wartung der Komponenten einer Anlage erforderlich. Da durch die Wartung im allgemeinen die Verwendung einer Komponente für einen Produktionsprozess nicht möglich ist, ist bei der Planung einer Wartung ein möglichst kurzer Ausfall der Komponente erstrebenswert. So kann es sinnvoll sein, schon vorab ein Ersatzteil für die Komponente zu bestellen, wenn dieses bei einer Wartung ausgetauscht werden soll. Auch kann ein Ersatzteil unabhängig von einer Wartung bestellt werden, wenn sich beispielsweise zeigt, dass dieses Teil fehleranfällig ist und ersetzt werden sollte.

Die Wartung eines Antriebsmotors kann die Überprüfung einer Antriebswelle umfassen sowie ein Fetten der Antriebswelle umfassen. Das benötigte Fett kann dann schon vorab bei der Planung der Wartung bestellt werden.

Zudem kann das Verfahren den Schritt vom Ändern von Betriebsparametern der Komponente der Anlage umfassen.

Die auf der Ausgabevorrichtung des mobilen Geräts dargestellten Daten können aktuelle Betriebsparameter der Komponente anzeigen und durch die interaktive Eigenschaft kann ein Nutzer beispielsweise über eine Eingabevorrichtung des mobilen Geräts neue Parameter eingeben, die dann an das zentrale Betriebsgerät übermittelt werden können, auf dem die Komponentenprogramme der einzelnen Komponenten der Anlage laufen. Der Vorteil ist, dass der Nutzer die Änderung(en) am Ort der Komponente vornehmen kann und nicht selbst zu dem zentralen Betriebsgerät gehen muss.

Durch die Eingabe entsprechender Geschwindigkeitswerte kann die Geschwindigkeit eines Antriebsmotors vergrößert oder verkleinert werden und so beispielsweise einer geänderten Förderleistung angepasst werden.

Das Verfahren kann weiter das Laden mindestens eines Anwendungsprogramms, das von der Internetseite und/oder dem zentralen Bediengerät zur Verfügung gestellt wird, umfassen. Durch ein solches Anwendungsprogramm kann beispielsweise eine detaillierte Fehleranalyse in Auftrag gegeben werden und/oder es können vordefinierte zeitliche Abfolgen von Betriebsparametem zur Verfügung gestellt werden.

Ein beispielhaftes mobiles Gerät zum Durchführen des oben beschriebenen Verfahrens umfasst eine Aufnahmevorrichtung zum Einlesen eines zweidimensionalen Mustercodes, einen Speicher, in dem ein Decodierprogramm gespeichert ist, das zum Decodieren des zweidimensionalen Mustercodes geeignet ist, und eine Ausgabevorrichtung zur Darstellung der Daten oder der angepassten Daten.

Das mobile Gerät ermöglicht einem Nutzer, die an Komponenten einer Anlage angebrachten zweidimensionalen Mustercodes direkt einzulesen und decodierte Daten angezeigt zu bekommen. Somit kann ein Nutzer mobil arbeiten und ist beispielsweise nicht auf die Arbeit an einem zentralen Bediengerät beschränkt.

Weiter kann das mobile Gerät eine Eingabevorrichtung umfassen, vorteilhafterweise einen Touch-Screen oder eine Tastatur, wobei der Speicher zudem eine Software speichert, die geeignet ist, um eine Verbindung zwischen dem mobilen Gerät und einer Internetseite und/oder einem zentralen Bediengerät herzustellen.

Das mobile Gerät kann zudem eine Not-Aus-Vorrichtung, z.B. in Form eines Schalters, umfassen, die ausgelegt ist, um bei Aktivierung vorteilhafterweise eine, mehrere oder alle Komponenten einer Anlage auszuschalten. Bei Aktivierung der Not-Aus-Vorrichtung kann ein Verbindungsaufbau durch das mobile Gerät zu dem zentralen Betriebsgerät aufgebaut werden, so dass von dem zentralen Betriebsgerät automatisch ein Ausschaltvorgang für die eine, die mehreren oder alle Komponenten erfolgen kann, in dem beispielsweise entsprechende Abschaltvorgänge in den Maschinenprogrammen der einen, der mehreren oder allen Komponenten ausgeführt werden.

Ein beispielhaftes Verfahren zum Erstellen eines zweidimensionalen Mustercodes, der zu einer Steuerung von mindestens einer Komponente in einer Anlage verwendet werden kann, umfasst folgende Schritte: Definieren mindestens einer Komponente, die in einem Produktionsauftrag verwendet werden soll; Definieren von Betriebsparametern der mindestens einen definierten Komponente; Definieren von Steuerbefehlen für die mindestens eine definierte Komponente; und Erstellen eines zweidimensionalen Mustercodes, dessen Daten die mindestens eine definierte Komponente, die definierten Betriebsparameter und die definierten Steuerbefehle umfassen.

Durch die Erstellung solcher zweidimensionaler Mustercodes ist einem Nutzer die Möglichkeit gegeben, z.B. für einen Produktionsauftrag alle relevanten Daten, wie benötigte Komponenten, Betriebsparameter der Komponenten, Zeitdauer und dergleichen, in einem Code zu speichern. Mittels der gespeicherten Steuerbefehle können die Komponenten betrieben werden und ein Produktionsauftrag effizient gestartet werden.

Weiter kann das Verfahren einen oder mehrere der folgende Schritte umfassen: Übermitteln des zweidimensionalen Mustercodes per Email an einen Nutzer, so dass der zweidimensionale Mustercode ausgedruckt und dann eingelesen werden kann; Übermitteln des zweidimensionalen Mustercodes an ein Mobiltelefon, so dass der zweidimensionale Mustercode von einem Display des Mobiltelefons dargestellt und von dem Display eingelesen werden kann; Speichern des zweidimensionalen Mustercodes auf einem Datenspeicher.

Der oder die zweidimensionalen Mustercodes können somit zentral erstellt werden, durch die Übermittlung können sie aber variabel eingesetzt werden. Beispielsweise durch die Darstellung auf einem Handydisplay wird einem Nutzer die Möglichkeit gegeben, den zweidimensionalen Musterode zu empfangen, wenn er sich bei einer Komponente der Anlage befindet und kann den zweidimensionalen Musterode zudem mittels eines mobilen Geräts auslesen, so dass die im zweidimensionalen Mustercode vorhandenen Daten ohne große Zeitverzögerung und/oder ohne großen Aufwand nutzbar sind.

Ein beispielhaftes Verfahren zum Einlesen eines zweidimensionalen Mustercodes einer Komponente in einer Anlage mit mindestens einer Komponente mittels einer Aufnahmevorrichtung eines mobilen Geräts und zur Verwendung und Ausführung von Daten, die in dem zweidimensionalen Mustercode enthalten sind, wobei die Daten für eine Steuerung mindestens eines Prozesses der Komponente vorgesehen sind, umfasst folgende Schritte: Einlesen eines zweidimensionalen Mustercodes mittels einer Aufnahmevorrichtung eines mobilen Geräts; Decodieren des zweidimensionalen Mustercodes, um Daten zu erhalten, die durch den zweidimensionalen Mustercode gegeben sind, die in Bezug zu der Komponente stehen, an der der zweidimensionale Mustercode angeordnet ist und die Steuerparameter mindestens eines Prozesses umfassen; Herstellen einer Verbindung mittels einer Verbindungssoftware zwischen dem mobilen Gerät und einem zentralen Bediengerät, wobei das zentrale Bediengerät eine Komponentensoftware für die Steuerung der Komponente umfasst; in Antwort auf das Herstellen der Verbindung, automatisches Übermitteln der Steuerparameter des mindestens einen Prozesses an die Komponentensoftware der Komponente; und Anwenden der Steuerparameter des mindestens einen Prozesses, wodurch Betriebsparameter der Komponente geändert werden.

Somit ist eine Anwendung von Steuerparametern durch Einlesen des zweidimensionalen Mustercodes möglich, ohne dass beispielsweise eine Eingabe von Parameterwerten durch einen Nutzer zu erfolgen hat.

Die Steuerparameter für einen Prozess können Werte für Betriebsparameter der Komponente umfassen, die geändert werden sollen. Durch Einlesen des zweidimensionalen Mustercodes können die Steuerparameter an die Komponentensoftware übermittelt und dort angewendet werden, so dass es zu einer Änderung der Betriebsparameter kommt.

Weiter kann in dem Verfahren nach dem Anwenden der Steuerparameter ein neuer zweidimensionaler Mustercode mittels einer Erstellungssoftware erstellt werden, die von der Komponentensoftware der Komponente umfasst wird, wobei der neue zweidimensionale Mustercode Informationen der geänderten Betriebsparameter der Komponente umfasst.

Somit ist es möglich, eine Datensicherung von aktuellen Betriebsparametern einer Komponente mittels des zweidimensionalen Mustercodes durchzuführen. Die Informationen der geänderten Betriebsparameter können beispielsweise die Werte der Betriebsparameter und die Zeit ihrer Änderung umfassen, zudem kann die Komponente angegeben sein, die diese Betriebsparameter betreffen.

Der erstellte neue zweidimensionale Mustercode kann in einem weiteren Schritt an einen Datenträger zur Speicherung des neuen zweidimensionalen Mustercodes und/oder an eine Druckvorrichtung übermittelt werden, beispielsweise mittels Datenfernübertragung.

Weitere Vorteile, Merkmale und Einzelheiten der Erfindung ergeben sich aus der nachfolgenden Beschreibung von bevorzugten Ausführungsbeispielen sowie anhand der Zeichnungen. Dabei zeigt:
Figur 1 eine Anlage, deren Komponenten mit QR-Codes^{®} ausgestattet sind;
Figur 2A ein nicht erfindungsgemäßes mobiles Gerät zur Darstellung von Daten eines QR-Codes^{®};
Figur 2B ein erfindungsgemäßes mobiles Gerät, das zudem eine erfindungsgemäße Eingabevorrichtung umfasst;
Figur 3A eine nicht erfindungsgemäße Datendarstellung auf einer Ausgabevorrichtung eines mobilen Geräts ohne Eingabevorrichtung;
Figur 3B eine erfindungsgemäße Datendarstellung mit interaktiven Elementen auf einer Ausgabevorrichtung eines mobilen Geräts mit einer Eingabevorrichtung;
Figur 3C eine weitere erfindungsgemäße Datendarstellung mit interaktiven Elementen auf einer Ausgabevorrichtung eines mobilen Geräts mit einer Eingabevorrichtung;
Figur 4 ein Flussdiagramm für ein erfindungsgemäßes Verfahren zum Einlesen eines QR-Codes^{®} und zur Darstellung von (angepassten) Daten.
Figur 5 ein Flussdiagramm für ein nicht erfindungsgemäßes Verfahren zum Einlesen eines OR-Codes^{®}.

In den Figuren und der Figurenbeschreibung wird Bezug auf einen QR-Code^{®} genommen, wobei dieser aber beispielsweise durch jeden anderen zweidimensionalen Muster- oder Strichcode ersetzbar ist. Auch kann vorgesehen sein, dass in einer Anlage unterschiedliche Arten von Codes verwendet werden.

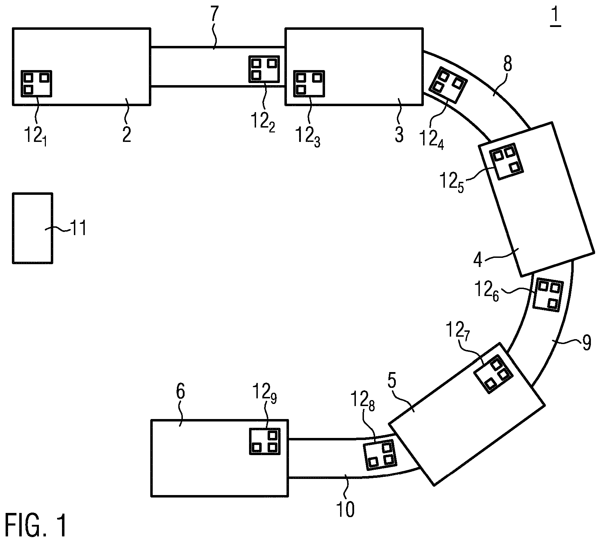

Die in Figur 1 schematisch dargestellte Anlage 1 zur Befüllung von Behältnissen, wie Flaschen, mit Produkten, umfasst eine Reinigungsanlage 2 für die Behältnisse, eine Abfüllanlage 3, eine Verschlussanlage 4, eine Etikettieranlage 5 und eine Verpackungsanlage 6. Zwischen diesen einzelnen Komponenten 2-6 befinden sich Förderbänder 7, 8, 9, 10, die zum Transport der Behältnisse dienen. Eine solche Anlage 1 kann auch weitere Komponenten umfassen, je nachdem welche Behältnisse mit welchen Produkten befüllt werden sollen und/oder je nachdem welche Anforderungen die Anlage erfüllen soll. Statt Förderbändern können beispielsweise auch modulare Fördereinrichtungen oder Rollenförderer oder dergleichen zum Einsatz kommen. Die einzelnen Komponenten 2-10 der Anlage 1 können von einem zentralen Bediengerät 11 (z.B. einem iPanel) gesteuert werden, d.h. es können dort Betriebsparameter eingegeben, geändert und/oder überwacht werden, Fehlermeldungen können gelesen und Fehler gegebenenfalls korrigiert werden, Ist-Betriebsparameter und/oder Soll-Betriebswerte können abgelesen werden.

Wie gezeigt, sind die Komponenten 2-10 der Anlage 1 mit individuellen QR-Codes^{®} 12₁, 12₂, 12₃, 12₄, 12₅, 12₆, 12₇, 12₈, 12₉ ausgestattet, die es ermöglichen, relevante Daten der jeweiligen Komponente angezeigt zu bekommen bzw. Zugriff auf die Daten zu erhalten und/oder weitere Information angezeigt zu bekommen bzw. abrufen zu können. Der QR-Code^{®} 12₁-12₉ kann hierbei in Form eines Etiketts direkt an einer Komponente angebracht sein, er kann in einer dafür vorgesehenen Halterung angeordnet sein oder der QR-Code^{®} 12₁-12₉ kann auf einem an der Komponente angebrachten elektronischen Display dargestellt werden.

Die relevanten Daten können Betriebsparameter, aktuelle Betriebswerte, Fehlermeldungen und/oder einen zeitlichen Betriebsverlauf der jeweiligen Komponente 2-10 umfassen. Zudem können die Daten die Position der jeweiligen Komponente 2-10 innerhalb der Anlage 1 anzeigen bzw. die Positionsdaten können abgerufen werden; auch kann die Position des zentralen Bediengeräts 11 innerhalb der Anlage 1 und somit relativ zu der jeweiligen Komponente 2-10 angegeben sein bzw. kann abgerufen werden.

Ein QR-Code^{®} 12₁-12₉ kann mittels einer Aufnahmevorrichtung 14, beispielsweise einer Kamera, eines mobilen Geräts 13, 18 eingelesen und durch ein Decodierprogramm 16, das in einem Speicher 15 des mobilen Geräts 13, 18 gespeichert ist, decodiert werden, so dass die im QR-Code^{®} 12₁-12₉ enthaltenen Daten auf einer Ausgabevorrichtung 17 des mobilen Geräts 13, 18 dargestellt werden können.

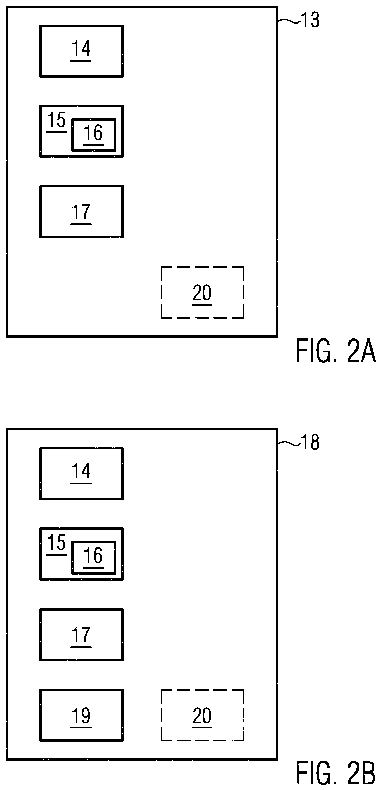

In Figur 2A ist ein mobiles Gerät 13 dargestellt, das eine Aufnahmevorrichtung 14 zum Einlesen eines QR-Codes^{®} 12₁-12₉ und eine Ausgabevorrichtung 17 zur Darstellung der decodierten Daten des QR-Codes^{®} 12₁-12₉ umfasst.

Das in der Figur 2B dargestellte erfindungsgemäße mobile Gerät 18 umfasst zudem eine Eingabevorrichtung 19, die als Tastatur oder als Touch-Screen vorgesehen sein kann. Eine solche Eingabevorrichtung 18 ist nicht notwendig, wenn mit einem mobilen Gerät 13 beispielsweise nur ein QR-Code^{®} 12₁-12₉ eingelesen und decodiert werden soll, so dass Daten mittels der Ausgabevorrichtung 17 dargestellt werden können. Ein mobiles Gerät 13 ohne Eingabevorrichtung dient dann zu einer Datendarstellung, während ein mobiles Gerät 18 mit einer Eingabevorrichtung 19 sowohl zur Datendarstellung (auf der Ausgabevorrichtung 17) wie auch zur Eingabe von Daten, wie Steuerparametern oder zur Aktivierung von dargestellten, interaktiven Daten, dienen kann.

Ein mobiles Gerät 13, 18 - mit oder ohne Eingabevorrichtung - kann zudem eine Not-Aus-Vorrichtung 20, beispielsweise in Form eines Schalters, umfassen, die ausgelegt ist, um bei Aktivierung vorteilhafterweise eine, mehrere oder alle Komponenten 2- 10 der Anlage 1 auszuschalten. Durch die Aktivierung der Not-Aus-Vorrichtung 20 kann ein Verbindungsaufbau durch das mobile Gerät 13, 18 zu dem zentralen Betriebsgerät 11 aufgebaut werden, so dass dort automatisch ein Ausschaltvorgang für die eine, die mehreren oder alle Komponenten erfolgen kann.

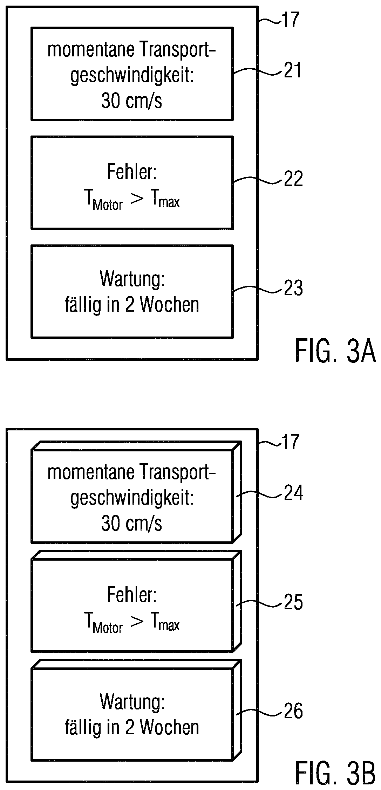

In den Figuren 3A bis 3C sind beispielhaft verschiedene Darstellungen von Daten auf Ausgabevorrichtungen 17 von verschiedenen mobilen Geräten 13, 18 gezeigt.

Die Darstellung der Daten ist für verschiedene Komponenten 2-10 der Anlage 1 unterschiedlich, aber auch abhängig von dem verwendeten mobilen Gerät 13, 18 kann die Darstellung der Daten für eine einzelne Komponente 2-10 verschieden sein.

In Figur 3A ist die nicht erfindungsgemäße Darstellung von Daten für ein Förderband 7-10, das beispielsweise von einem Motor angetrieben wird, auf der Ausgabevorrichtung 17 eines mobilen Geräts 13 ohne Eingabevorrichtung gezeigt, wohingegen in Figur 3B eine erfindungsgemäße Darstellung von Daten für dieses Förderband 7-10 auf der Ausgabevorrichtung 17 eines mobilen Geräts 18 mit einer Eingabevorrichtung 19 gezeigt ist.

Die Daten in Figur 3A umfassen eine Anzeige der momentanen Transportgeschwindigkeit 21 des Förderbands 7-10, eine Fehlermeldungsanzeige 22, dass der Antriebsmotor eine Grenztemperatur Tₘₐₓ überschritten hat und einen Hinweis 23, dass eine Wartung in zwei Wochen fällig ist.

Die Daten in der erfindungsgemäßen Darstellung von Figur 3B umfassen ebenfalls eine Geschwindigkeitsanzeige der momentanen Transportgeschwindigkeit 21 des Förderbands 7-10, eine Fehlermeldungsanzeige 25, dass der Antriebsmotor eine Grenztemperatur Tₘₐₓ überschritten hat und einen Hinweis 26, dass eine Wartung in zwei Wochen fällig ist. Hierbei sind die Geschwindigkeitsanzeige, die Fehlermeldungsanzeige und der Wartungshinweis interaktiv ausgeführt (angezeigt durch eine schematische 3D Darstellung), so dass sie mittels der Eingabevorrichtung 19 des mobilen Geräts 18, beispielsweise durch Drücken einer Eingabetaste, aktiviert werden können.

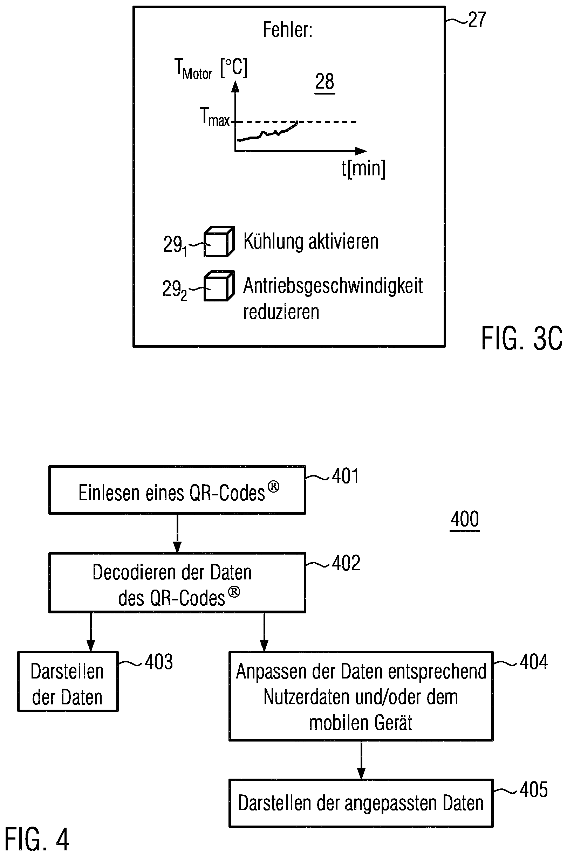

Durch Aktivierung der Fehlermeldungsanzeige 25 kann, wie in Figur 3C gezeigt, eine weitere Darstellung 27 von Daten erstellt werden, der zeitliche Temperaturverlauf 28 des Antriebsmotors angezeigt werden und als Möglichkeiten zur Behebung des Fehlers werden eine erste und eine zweite Option 29₁, 29₂ angezeigt. Beispielsweise kann eine zusätzliche Kühlung aktiviert werden (erste Option) oder die Antriebsgeschwindigkeit kann reduziert werden (zweite Option). Beispielsweise kann sich bei der Auswahl der zweiten Option 29₂ ergeben, dass die Antriebsgeschwindigkeit reduziert wird, dass Betriebsparameter der anderen Komponenten 2-10 der Anlage 1 angepasst werden müssen, damit ein reibungsloser Betrieb der Anlage 1 gewährleistet werden kann. Diese neuen Betriebsparameter werden vorteilhafter Weise automatisch berechnet und dann an die jeweiligen Komponenten 2-10 der Anlage 1 weitergeleitet, so dass bei Bedarf die aktuellen Betriebsparameter in die neuen Betriebsparameter geändert werden.

Bei Aktivierung des Hinweises 26, dass eine Wartung in zwei Wochen fällig ist, kann eine Wartung in Auftrag gegeben werden und für den Betrieb der Anlage 1 der wartungsbedingte Wegfall der Komponente 2-10 weitergegeben werden. Ist es notwendig, bei der Wartung ein Teil der Komponente 2-10 zu ersetzen, so kann ein diesem Teil entsprechendes Ersatzteil bestellt werden.

Neben einer von der Art des mobilen Geräts abhängigen Darstellung der Daten, ist die Datendarstellung für eine einzelne Komponente 2-10 erfindungsgemäß von dem jeweiligen Nutzer des mobilen Geräts 13, 18 abhängig. Beispielsweise können die Daten, die einem Techniker durch den QR-Code^{®} 12₁-12₉ angezeigt werden, technische Detailangaben und Betriebsparameter der Komponente 2-10 umfassen, während die Daten, die einem Nutzer, der einen Produktionsauftrag überprüfen will, den Fortgang der Produktion an der Komponente 2-10 anzeigen können.

Mittels eines mobilen Geräts 13, 18 ist es auch möglich QR-Codes^{®} einzulesen, die beim Einlesen, beispielsweise ohne die Eingabe von Parametern, direkt zu einer Ausführung von Steuerbefehlen führen, wie beispielsweise Änderungen von Maschinen- und/oder Sortenparametern. Die Aktivierung der Ausführung der Steuerbefehle kann aber auch erst durch Ausführung eines entsprechenden Aktivierungsbefehls gestartet werden.

Solche QR-Codes^{®}, die zu einer Ausführung von Steuerbefehlen führen, können (unabhängig von den Komponenten der Anlage) erstellt und beispielsweise direkt durch Versand mittels Email an einen Nutzer oder mittels MMS an ein Handy eines Nutzers geschickt werden. So kann der QR-Code^{®} ausgedruckt und eingelesen oder vom Display des Handys eingelesen werden. Es ist aber auch möglich, die Erstellungsdaten des QR-Codes^{®} an den Nutzer zu schicken, so dass der Nutzer den QR-Code^{®} dann selbst mittels einer QR-Code^{®}-Erstellungssoftware erzeugen und anschließend ausdrucken kann.

Weiterhin ist es möglich einen QR-Code^{®} zu erstellen, der Daten enthält, die die Umsetzung eines Produktionsauftrags steuern. In dem QR-Code^{®} sind beispielsweise alle Sorten enthalten, die geladen werden müssen, um den Produktionsauftrag zu starten. Dieser QR-Code^{®} kann beispielsweise zentral oder an jeder Maschine einzeln eingelesen werden, um die notwendigen Sorten zu laden.

Figur 4 stellt ein Flussdiagram eines erfindungsgemäßen Verfahrens 400 dar. In Schritt 401, kann mittels der Aufnahmevorrichtung 14 eines mobilen Geräts 13, 18 ein QR-Code^{®} 12₁-12₉ eingelesen werden, der dann im Schritt 402 mittels einer Decodiersoftware 16, die in einem Speicher 15 des mobilen Geräts 13, 18 gespeichert sein kann, decodiert werden kann. Die decodierten Daten können im Schritt 403 auf einer Ausgabevorrichtung 17 des mobilen Geräts 13, 18 angezeigt werden.

Bevor die decodierten Daten auf der Ausgabevorrichtung 17 dargestellt werden, erfolgt erfindungsgemäß zudem in einem Schritt 404 eine Anpassung der decodierten Daten entsprechend von Nutzerdaten. Nutzerdaten können hierbei durch Einlesen einer Nutzeridentifizierung eines Dienstausweises mittels der Aufnahmevorrichtung 14 erkannt werden. Die Nutzerdaten können Aufschluss darüber geben, ob es sich bei dem Nutzer um einen Techniker handelt, für den technische Detailangaben und Betriebsparameter von Komponenten 2-10 der Anlage 1 relevant sind oder ob es sich bei dem Nutzer, um einen Nutzer handelt, der Produktionsaufträge überprüfen soll und für den der Verlauf der Produktionsschritte der Komponenten 2-10 der Anlage 1 relevant sind.

Die decodierten Daten können entsprechend dem verwendeten Gerät 13, 18 angepasst werden. Besitzt das erfindungsgemäße mobile Gerät 18 eine Eingabevorrichtung 19, so werden mittels der Eingabevorrichtung 19 interaktive Daten aktiviert, weshalb eine entsprechende Kennzeichnung (z.B. durch schematische 3D Darstellung, wie in Figuren 3B und 3C gezeigt) wünschenswert ist, damit ein Nutzer des mobilen Geräts 18 das interaktive Merkmal erkennt. Die Interaktivität wird durch das mobile Gerät 18 beispielsweise nach Aktivierung (z.B. durch Drücken einer Eingabetaste der Eingabevorrichtung 19 ausgelöst) durch Verbindungsaufbau mit einer Internetseite, auf der Betriebsprogramme von einer oder mehreren Komponenten 2-10 der Anlage 1 abrufbar sind, ermöglicht. Der Nutzer kann dann mittels der Eingabevorrichtung 19 Parameter ändern, und/oder weitere Details des Betriebs einer Komponente 2-10 abrufen.

Um eine Anpassung der decodierten Daten entsprechend von Nutzerdaten vorzunehmen, kann im Speicher 15 des mobilen Geräts 13, 18 ein durch einen Prozessor des mobilen Geräts 13, 18 ausführbares Verarbeitungsprogramm gespeichert sein, mit dem aus den decodierten Daten eine Auswahl von Daten erfolgen kann, die den Nutzerdaten entsprechen.

Nach einer Anpassung der Daten können die angepassten Daten im Schritt 405 auf einer Ausgabevorrichtung 17 des mobilen Geräts 13, 18 dargestellt werden.

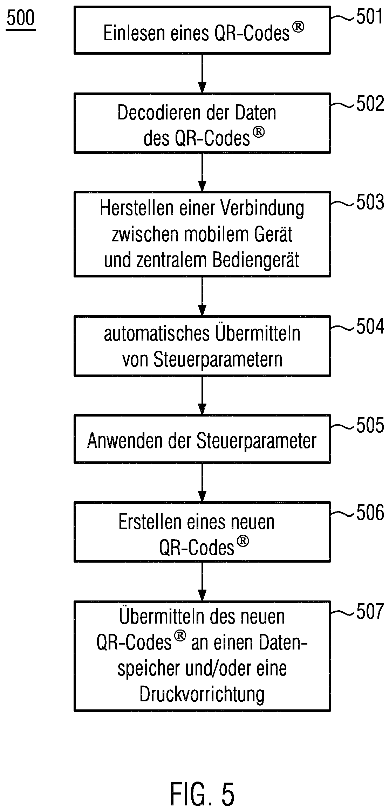

Figur 5 stellt ein Flussdiagramm dar für ein nicht erfindungsgemäßes Verfahren 500 zum Einlesen eines OR-Codes^{®} 12₁-12₉ einer Komponente 2-10 in einer Anlage 1 mit mindestens einer Komponente 2-10 mittels einer Aufnahmevorrichtung 14 eines mobilen Geräts 13, 18 und zur Verwendung und Ausführung von Daten, die in dem QR-Code^{®} 12₁-12₉ enthalten sind, wobei die Daten für eine Steuerung mindestens eines Prozesses der Komponente 2-20 vorgesehen sind. Optional kann in den Schritten 506 und 507 auch ein neuer QR-Code^{®} 12₁-12₉ erstellt und an einen Datenspeicher und/oder eine Druckvorrichtung übermittelt werden.

Die Daten für die Steuerung können beispielsweise Werte für Betriebsparameter eines Antriebsmotors von beispielsweise einem Förderband umfassen. Bevor der QR-Code^{®} 12₁-12₉ eingelesen wird, befindet sich dieser Antriebsmotor in einem ersten Betriebszustand, d.h. er wird mit eingestellten ersten Betriebsparametern betrieben. Die Daten, die in dem QR-Code^{®} 12₁-12₉ enthalten sind, stellen nach dem Einlesen und Decodieren dann zweite Betriebsparameter zur Verfügung. Dabei kann zum Betrieb des Antriebsmotors beispielsweise eine Definition von vier Betriebsparametern erforderlich sein, d.h. wenn sich der Antriebsmotor in dem ersten Betriebszustand befindet, gibt es vier erste Betriebsparameter. Die Werte der zweiten Betriebsparameter können sich für einen, zwei, drei oder vier Werte der ersten Betriebsparameter unterscheiden.

Im Schritt 501 wird zunächst der QR-Code^{®} 12₁-12₉ eingelesen, beispielsweise mittels einer Aufnahmevorrichtung 14 eines mobilen Geräts 13, 18.

Im Schritt 502 wird der QR-Code^{®} 12₁-12₉ mittels einer Decodiersoftware 16 decodiert, die in einem Speicher 15 des mobilen Geräts 13, 18 gespeichert sein kann. Somit stehen die im QR -Code^{®} 12₁-12₉ gespeicherten Daten für weitere Anwendungen zur Verfügung.

Im Schritt 503 wird eine Verbindung zwischen dem mobilen Gerät 13, 18 und einem zentralen Bediengerät 11 hergestellt, so dass zwischen dem mobilen Gerät 13, 18 und dem zentralen Bediengerät 11 Daten übermittelt werden können. Die Verbindung kann eine drahtlose Verbindung sein. Vorzugsweise ist das zentrale Bediengerät 11 so ausgelegt, dass auch mehrere mobile Geräte 13, 18 eine Verbindung zu ihm herstellen können. Zudem kann das zentrale Bediengerät 11, z.B. in einem Speichermedium, eine Komponentensoftware für die Steuerung der Komponente 2-10 umfassen. Vorzugsweise ist für alle Komponenten 2-10 der Anlage 1 jeweils eine geeignete Komponentensoftware gespeichert. Mittels der Komponentensoftware kann beispielsweise durch Einlesen und/oder Eingeben von Werten für Betriebsparameter, der Betrieb der Komponente 2-10 gesteuert werden.

Nach der Herstellung der Verbindung erfolgt im Schritt 504 ein automatisches Übermitteln von Steuerparametern des mindestens einen Prozesses, die in den Daten des QR -Codes^{®} 12₁-12₉ gespeichert sind, an die Komponentensoftware der Komponente 2-10, so dass die Steuerparameter von der Komponentensoftware verwendet werden können.

Im Schritt 505 werden dann die übermittelten Steuerparameter angewendet, wodurch Betriebsparameter der Komponente 2-10 geändert werden können.

Nach der Änderung der Betriebsparameter der Komponente 2-10 können optional noch die neuen, geänderten Betriebsparameter, mit denen die Komponente 2-10 dann betrieben wird, in einem QR-Code 12₁-12₉ gespeichert werden, so dass eine effiziente Datenspeicherung erreicht werden kann.

Im Schritt 506 wird nach dem Anwenden der Steuerparameter ein neuer QR-Code 12₁-12₉ mittels einer Erstellungssoftware erstellt, die von der Komponentensoftware der Komponente 2-10 umfasst wird, wobei der neue QR-Code 12₁-12₉ Informationen der geänderten Betriebsparameter der Komponente 2-10 umfasst. Im Schritt 507 wird der QR-Code 12₁-12₉ an einen Datenträger zur Speicherung und/oder an eine Druckvorrichtung übermittelt.

## Patentansprüche

1. Verfahren zum Einlesen eines zweidimensionalen Mustercodes (12₁-12₉) einer Komponente (2, 3, 4, 5, 6, 7, 8, 9, 10) in einer Anlage (1) mit Komponenten (2-10) mittels einer Aufnahmevorrichtung (14) eines mobilen Geräts (13, 18) und zur Darstellung und Verwendung von Daten, die in dem zweidimensionalen Mustercode enthalten sind, mittels einer Ausgabevorrichtung (17) des mobilen Geräts (13, 18), wobei das Verfahren folgende Schritte umfasst:
- Einlesen eines zweidimensionalen Mustercodes (12₁-12₉) mittels einer Aufnahmevorrichtung (14) eines mobilen Geräts (13, 18);
- Decodieren des zweidimensionalen Mustercodes (12₁-12₉), um Daten zu erhalten, die durch den zweidimensionalen Mustercode (12₁-12₉) gegeben sind und in Bezug zu einer Komponente (2-10) stehen, an der der zweidimensionale Mustercode (12₁-12₉) angeordnet ist;
**gekennzeichnet durch**
- Anpassen der aus dem Decodieren des zweidimensionalen Mustercodes (12₁-12₉) erhaltenen Daten entsprechend von Nutzerdaten und Darstellen der angepassten Daten mittels einer Ausgabevorrichtung (17) des mobilen Geräts (13, 18), wobei die angepassten Daten interaktiv sind, so dass einem Nutzer bei Aktivierung der angepassten Daten weitere Daten und Informationen auf der Ausgabevorrichtung (17) anzeigbar sind, wobei das Darstellen der angepassten Daten eine Anzeige von Betriebsparametern, aktuellen Betriebswerten, Fehlermeldungen und/oder einem zeitlichen Betriebsverlauf der Komponente (2-10) umfasst,
- in Antwort auf eine Aktivierung der angepassten Daten durch den Nutzer, Herstellen einer Verbindung mittels einer Verbindungssoftware zwischen dem mobilen Gerät (18) und einer Internetseite und/oder einem zentralen Bediengerät (11),
- Zugreifen auf die weiteren Daten und die Informationen,
- Übermitteln der weiteren Daten und der Informationen und
- Anzeigen der weiteren Daten und der Informationen auf der Ausgabevorrichtung (17).

2. Das Verfahren nach Anspruch 1, wobei das Verfahren weiter den Schritt umfasst:
- Darstellen einer Position der Komponente (2-10) innerhalb der Anlage (1), wobei vorzugsweise auch eine Position eines zentralen Bediengeräts (11) der Anlage (1) dargestellt wird.

3. Das Verfahren nach Anspruch 1 oder 2, wobei das Verfahren weiter den Schritt/die Schritte umfasst:
- in Auftrag geben eines Wartungsauftrags für die Komponente (2-10) der Anlage (1) durch den Nutzer; und/oder
- Bestellen eines Ersatzteils für die Komponente (2-10) der Anlage (1) durch den Nutzer.

4. Das Verfahren nach einem der Ansprüche 1 bis 3, wobei das Verfahren weiter den Schritt umfasst:
- Ändern von Betriebsparametern der Komponente (2-10) der Anlage (1), wobei die Änderung der Betriebsparameter durch eine Eingabe durch den Nutzer oder automatisch in Antwort auf das Herstellen der Verbindung zwischen dem mobilen Gerät (18) und der Internetseite und/oder dem zentralen Bediengerät (11) erfolgt.

5. Das Verfahren nach einem der Ansprüche 1 bis 4, wobei das Verfahren weiter den Schritt umfasst:
- Laden mindestens eines Anwendungsprogramms, das von der Internetseite und/oder dem zentralen Bediengerät (11) zur Verfügung gestellt wird, wobei das Anwendungsprogramm vorzugsweise Mittel für eine Fehleranalyse einer Komponente (2-20) der Anlage (1) und/oder Mittel für eine Darstellung von vordefinierten zeitlichen Abfolgen von Betriebsparametern der Komponente (2-10) der Anlage (1) umfasst.

6. Das Verfahren nach Anspruch 5, wobei das Laden durch eine Eingabe durch den Nutzer oder automatisch in Antwort auf das Herstellen der Verbindung zwischen dem mobilen Gerät (18) und der Internetseite und/oder dem zentralen Bediengerät (11) erfolgt.

## Claims

1. Method for reading in a two-dimensional pattern code (12₁-12₉) of a component (2, 3, 4, 5, 6, 7, 8, 9, 10) in a system (1) comprising components (2-10) by means of a recording device (14) of a mobile device (13, 18), and for representing and using data contained in the two-dimensional pattern code (12₁-12₉) by means of an output device (17) of the mobile device (13, 18), the method comprising the steps of:
- reading in a two-dimensional pattern code (12₁-12₉) by means of a recording device (14) of a mobile device (13, 18);
- decoding the two-dimensional pattern code (12₁-12₉) to obtain data that are given by the two-dimensional pattern code (12₁-12₉) and that are related to a component (2-10) on which the two-dimensional pattern code (12₁-12₉) is arranged;
**characterised by**
- adapting the data obtained from the decoding of the two-dimensional pattern code (12₁-12₉) according to user data and representing the adapted data by means of an output device (17) of the mobile device (13, 18), wherein the adapted data are interactive, so that, by activation of the adapted data, a user can be displayed further data and information on the output device (17), wherein the representing of the adapted data comprises a display of operating parameters, current operating values, error messages and/or time-wise operating procedure of the component (2-10),
- in response to an activation of the adapted data by the user, establishing a connection between the mobile device (18) and a website and/or a centralised apparatus (11) by means of a connection software,
- accessing the further data and the information,
- transmitting the further data and the information and
- displaying the further data and the information on the output device (17).

2. The method according to claim 1, the method further comprising the step of:
- representing a position of the component (2-10) inside the system (1), wherein preferably also a position of a centralized operating apparatus (11) of the system (1) is represented.

3. The method according to claim 1 or 2, the method further comprising the step/the steps of:
- ordering a maintenance order for the component (2-10) of the system (1) by the user; and/or
- ordering a replacement part for the component (2-10) of the system (1) by the user.

4. The method according to one of the claims 1 to 3, the method further comprising the step of:
- changing operating parameters of the component (2-10) of the system (1), wherein the changing of the operating parameters is realised by an input by the user, or automatically in response to establishing the connection between the mobile device (18) and the website and/or the centralized operating apparatus (11).

5. The method according to one of the claims 1 to 4, the method further comprising the step of:
- loading at least one application program which is made available by the website and/or the centralized operating apparatus (11), wherein the application program preferably comprises means for an error analysis of a component (2-20) of the system (1) and/or means for a representation of predefined time sequences of operating parameters of the component (2-10) of the system (1).

6. The method according to claim 5, wherein the loading is realised by an input by the user, or automatically in response to establishing the connection between the mobile device (18) and the website and/or the centralized operating apparatus (11).

## Revendications

1. Procédé pour la lecture d'un code de modèle bidimensionnel (121-129) d'un composant (2, 3, 4, 5, 6, 7, 8, 9, 10) dans une installation (1) comprenant des composants (2-10) au moyen d'un dispositif d'enregistrement (14) d'un appareil mobile (13, 18) et pour la représentation et l'utilisation de données, qui sont contenues dans le code de modèle bidimensionnel, au moyen d'un dispositif d'émission (17) de l'appareil mobile (13, 18), le procédé comprenant les étapes consistant à :
- lire un code de modèle bidimensionnel (12i-129) au moyen d'un dispositif d'enregistrement (14) d'un appareil mobile (13, 18) ;
- décoder le code de modèle bidimensionnel (12i-129) pour obtenir des données provenant du code de modèle bidimensionnel (12i-129) et se rapportant au composant (2-10) sur lequel est agencé le code de modèle bidimensionnel (12i-129) ;
**caractérisé par** les étapes consistant à
- adapter données obtenues à partir du décodage du code de modèle bidimensionnel (12i-129) en fonction de données d'utilisateur et représenter les données adaptées au moyen d'un dispositif d'émission (17) de l'appareil mobile (13, 18), les données adaptées étant interactives de sorte que des données supplémentaires et des informations peuvent être affichées sur le dispositif d'émission (17) à un utilisateur lors de l'activation des données adaptées, la représentation des données adaptées comprenant un affichage de paramètres de fonctionnement, de valeurs de fonctionnement actuelles, de messages d'erreur et/ou d'un historique de fonctionnement du composant (2-10),
- en réponse à l'activation des données adaptées par l'utilisateur, établir une connexion au moyen d'un logiciel de connexion entre l'appareil mobile (18) et une page Internet et/ou un appareil de commande central (11),
- accéder aux données supplémentaires et aux informations,
- transmettre les données supplémentaires et les informations et
- affichage les données supplémentaires et les informations sur le dispositif d'émission (17).

2. Procédé selon la revendication 1, dans lequel le procédé comprend en outre l'étape consistant à :
- représenter une position du composant (2-10) à l'intérieur de l'installation (1), une position d'un appareil de commande central (11) de l'installation (1) étant de préférence également représentée.

3. Procédé selon la revendication 1 ou 2, dans lequel le procédé comprend en outre les étapes consistant à :
- programmer via l'utilisateur un travail de maintenance pour le composant (2-10) de l'installation (1) ; et/ou
- commander via l'utilisateur une pièce de rechange pour le composant (2-10) de l'installation (1).

4. Procédé selon l'une quelconque des revendications 1 à 3, dans lequel le procédé comprend en outre l'étape consistant à :
- modifier des paramètres de fonctionnement du composant (2-10) de l'installation (1), la modification des paramètres de fonctionnement s'effectuant par une entrée via l'utilisateur ou automatiquement en réponse à l'établissement de la connexion entre l'appareil mobile (18) et le site Internet et/ou l'appareil de commande central (11).

5. Procédé selon l'une quelconque des revendications 1 à 4, dans lequel le procédé comprend en outre l'étape consistant à :
- charger au moins un programme d'application qui est mis à disposition par le site Internet et/ou l'appareil de commande central (11), le programme d'application comprenant de préférence des moyens pour une analyse d'erreur d'un composant (2-20) de l'installation (1) et/ou des moyens pour une représentation de séquences temporelles prédéfinies de paramètres de fonctionnement du composant (2-10) de l'installation (1).

6. Procédé selon la revendication 5, dans lequel le chargement est effectué par une entrée de l'utilisateur ou automatiquement en réponse à l'établissement de la connexion entre le dispositif mobile (18) et le site Internet et/ou le dispositif de commande central (11).
